# EUROPEAN PATENT APPLICATION

(11) **EP 0 991 043 A1**
(43) Date of publication of application: **05.04.2000**
(21) Application number: 99203188.0
(22) Date of filing: 30.09.1999
(51) Int. Cl.: G08G 1/005, G08G 1/0968

(54) **Electronic signs for mobile information devices**

(30) Priority: 30.09.1998 US 164526
(71) Applicant: Texas Instruments Incorporated, Dallas, Texas 75251 (US)
(72) Inventor: Linn, John C., Richardson, Texas (US); McMahan, Michael L., Plano, Texas (US); Wrappe, Thomas K., Plano, Texas (US)
(74) Representative: Holt, Michael

(57) **Abstract**

A communication method and system which includes an electronic sign (21) capable of providing at least one of an active or passive coded signal and a remote mobile unit (35) having each of a receiver (27) for detecting and receiving the coded signal, a data base (29) responsive to the coded signal received by the receiver and a mobile telephone (31) responsive to signals received from the data base in response to a coded signal received from the data base for providing at least one of an audible (33) or visual human intelligible message to the mobile telephone. The receiver is directed toward the electronic sign to receive the coded signal from the electronic sign and using the coded signal as a key, returning the information for the sign via a wireless digital connection to a data base. The returned information is presented to be viewed visually and/or audibly. The coded passive signal is one or both of passive and non-electromagnetic wave radiating or active and electromagnetic wave radiating. The telephone can also be responsive to the coded signal received from the data base for telephonic connection with a further unit remote from the remote unit. In accordance with a second embodiment, the human intelligible message can be a direction error message provided by the data base in response to the coded signal from the electronic sign indicating the misdirection relative to the electronic sign. The human intelligible message can also includes a geographic message. The mobile telephone can also be responsive to signals received from the data base in response to a coded signal received from the electronic sign for telephonic connection with a further unit remote from said remote unit.

## Description

### FIELD OF THE INVENTION

This invention relates to a sign capable of affecting a mobile device by providing active and/or passive signals to the mobile device and wherein the mobile device is capable of interpreting the active and/or passive signals and, in response thereto, performing some function. Among functions that can be performed by the mobile device are addressing a remote data base directly for a fed back response, the fed back response being either a selected or unselected message with selection, if appropriate, being made by the mobile device. A universal resource locator (URL) of the type used in the world wide web (WWW) on the internet could provide such information.

### BRIEF DESCRIPTION OF THE PRIOR ART

Typical prior art signs are audible and/or visible signs accessible to the public are provided with passive, non-changeable information such as, for example, road signs, billboards, street indicators at street corners as well as passive changeable signs wherein the characters may be either in motion or stationary and changeable. While signs of this type can provide a great deal of information, they are limited in information capacity by area restrictions and/or data base restrictions. In addition, such signs are not readily adaptable for entry into a suitable network browsing device with the option of storage. Furthermore, such signs are of no use to persons who are visionless or of limited vision.

### SUMMARY OF THE INVENTION

In accordance with the teachings of the present application, the above described problems of the prior art are minimized and there is provided an "electronic" sign that is capable of providing substantially the same information as a visual sign as well as additional information not readily available with a prior art visual sign. For the purpose of this application, an electronic sign is defined as a sign having thereon either a passive coded signal which can be detected and read by a remote reader, such as, for example, a bar code, or an active signal emitting device which can be picked up and read by a remote reader, such as, for example an electromagnetic radiation such as radio frequencies, infra red and the like. In general, a passive coded signal as used herein defines a coded signal wherein the code itself is actually seen by the receiver and an active coded signal is defined herein as a coded signal which is not seen by the receiver. The remote reader is preferably a cellular telephone with wireless data access having therein additional circuitry for reading the electronic sign and capable of providing a response to the signals received from the electronic sign. The response can be, for example, an audible message provided as a result of translating the received signal via a data base in a remote network device or a digital message suitable for display on the remote reader. The remote reader can, using internal information and software, modify the resulting message in a manner suitable to the user, or request new information based upon the original message. The remote reader can be carried by a pedestrian or in a vehicle

It is accordingly apparent that, due to the electronic nature of the sign and the capabilities of electronic communication, much more extensive and linked information can be made available which is tailored to the specific needs, desires or handicaps of the user and which is dynamic and can easily be changed moment by moment as the situation arises. The electronic sign in accordance with the present teachings can be used alone or in conjunction with conventional visual signs. The conventional sign provides the visual cues for the electronic sign. However, the electronic sign may be used as a stand-alone device as well as in situations where the presence of the sign is well known or where the expected user is handicapped or otherwise unable to see the visual sign.

Since any received information is initially in coded form, such information can be stored for future use either in the remote unit and/or in an auxiliary unit connected to the remote unit, such as, for example a personal computer (PC).

It is therefore apparent that electronic signs in conjunction with network services and local computation in a wireless network device (WND) can form the basis for more useful and user friendly services that are presently provided by the visual signs of the prior art.

In operation, the electronic sign produces a digital signature that can be associated with a place, object of thing (such as but not limited to a data base). This signature is a serial number, a universal resource locator (URL) or some other manner of indexing the information content of the sign with the signature. The operation generally follows the sequence wherein the user of the WND, a cellular telephone with built-in appropriate mechanism for reading the sign or the like, initially selects which sign is to be read using the mechanism appropriate to the coded signal of the sign. The sign supplies the WND device with the coded signal in digital form and the WND, either as directed by the user or automatically, requests the information content of the sign from a specific server on the network. This request is made through standard digital network protocols, such as a wireless implementation of the WWW protocol. If the sign provides a serial number as the coded signal, the network looks up that serial number and responds with the appropriate WWW page or other suitable network information associated with the sign. If the sign provides a URL, the network responds directly with the content of the sign. The WND optionally provides to the network any user specific information that may be used to interpret the content of the sign. The WND interprets the returned content using its built-in content browsing capability which can be a WWW browser or suitable equivalent visual interface, such as, for example, an Unwired Planet's browser. Interpretations other than text or graphics are possible using speech, audio cues or Braille.

These interpretations are provided either via special information stored and served over the network or via direct conversion in the WND. This multi-mode approach serves people who are disable, prefer a different language or working hands and eyes free.

It can be seen that, in accordance with the present invention, no local data base is required at the remote unit or cellular telephone.

### BRIEF DESCRIPTION OF THE DRAWINGS

The present invention will now be further described, by way of example, with reference to certain exemplary embodiments illustrated in the accompanying drawings in which:
FIGURE 1 is a schematic diagram in accordance with several embodiments of the stet; and
FIGURE 2 is a schematic diagram in accordance with a second embodiment stet.

### DESCRIPTION OF THE PREFERRED EMBODIMENTS

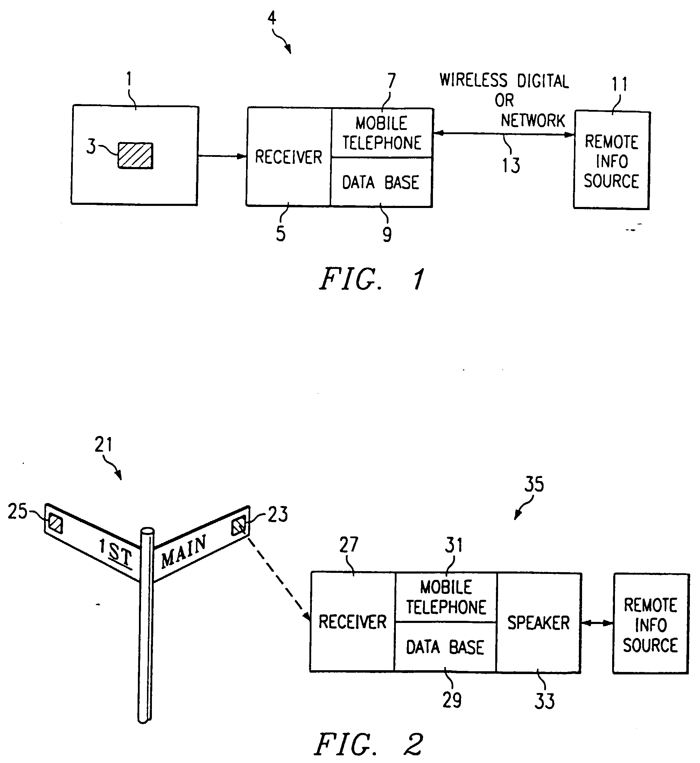

Referring to FIGURE 1, there is shown a first embodiment in accordance with the present invention. There is shown an electronic sign 3 in the form of a receivable code which can be passive, such as a bar code, or active, such as an electromagnetic radiation. The electronic sign 3 is mounted on a billboard or the like 1 which may have alphanumeric and/or graphic information thereon in addition. A remote unit 4 contains a receiver 5 for detecting the receivable code from the electronic sign, translating the received code directly into an audible message and/or locating a block of stored code corresponding to the received code for enabling a retransmission, all in conjunction with a data base 9 and providing one of several possible functions as a result of the translation if the received code corresponds to a data base entry. The retransmission is generally by way of a wireless digital two-way transmission from the mobile telephone 7 to a remote location.

A first function of a corresponding reception of a coded signal from the electronic sign by the receiver 5 is to either convert the received signal to an audible message and/or to access an address in the data base 9 corresponding to the received signal which provides an audible message, both under control of the data base. The data base can be either local to the receiver or accessible via a wireless network in a manner similar to or identical to data services provided by digital cellular networks. The audible message is provided to the user via the earpiece of the mobile telephone 7 at the remote unit 4. The audible signal can be, for example, "you are entering Texas", with the data base programmed to perform this function.

A second function of a corresponding reception of a coded signal from the electronic sign by the receiver 5 is to access an address in the data base 9 corresponding to the received signal and, in response thereto, dial a number or otherwise access a wireless, digital network via the mobile telephone via transmission link 13 which can be, for example, wireless digital transmission and/or audio and the like.. This action can be under control of the data base 9 or directly in the event a index or URL for retransmission is received. This connects the mobile telephone 7 with a remote digital information source 11 which is another telephone which can include a data base, a human operator or the like. The remote information source 11 can provide an audible message back to the mobile telephone 7, can hold a one way or two way conversation with telephone 7 using voice or coded signals and the message received at the mobile telephone can be recorded, whether it be audible or in code. Added messages can be later viewed via a built in browser also used for world wide web access. The recording can be by way of a memory provided in the remote unit 4 or by connection of the remote unit to a storage for the returned message.

In accordance with another embodiment of the invention, the remote unit can be used as a direction finder as well as an information obtaining source. Referring to FIGURE 2, there is shown a use of a system in accordance with the present invention which can be used by persons with defective or no vision and possibly replace or minimize the need of a cane and/or a seeing-eye dog. There is shown a corner street sign 21 which is of standard design except that it also includes an electronic sign 23 for Main Street and 25 for 1st Street. The electronic signs 23 and 25 can each have the same code or provide a code unique to the street name designated on the sign. The user is provided with a remote unit 35 having a standard receiver 27 which is capable of reading the code from the electronic sign, a data base 29, a mobile telephone 31 and a speaker 35. In conjunction with the data base 29, the name of the street can be provided, either directly from the electronic sign, from the data base in response to code received from the electronic sign or by dialing a remote location in response to code received from the electronic sign 23, whereby an answer back is provided to indicate the name of the street. In addition, the electronic sign 29 can be used as a direction finder to indicate to the user his or her position relative to a curb and the street corner, assuming that the electronic sign 29 is positioned at the street corner. This is accomplished by moving the remote unit 35 relative to the electronic sign 29 until the remote unit indicates a peak signal being received from the electronic sign. The remote unit 35, via the data base 29 then calculates offset of the remote unit from a proper path and states audibly the misdirection. In this manner, a person with impaired vision can navigate without or with minimal need of a cane and/or a seeing eye dog while also having the additional advantage of knowing his or her exact location geographically.

Though the invention has been described with reference to specific preferred embodiments thereof, many variations and modifications will immediately become apparent to those skilled in the art. It is therefore the intention that the appended claims be interpreted as broadly as possible in view of the prior art to include all such variations and modifications.

## Claims

1. A communication method which comprises:
(a) providing an electronic sign capable of providing at least one of an active or passive coded signal;
(b) providing a remote mobile unit having:
a receiver for detecting and receiving said coded signal, a data base responsive to said coded signal received by said receiver and
a digital mobile telephone or mobile digital network device responsive to signals received from said data base in response to a coded signal received from said data base for providing at least one of an audible or viewed human intelligible message to said mobile telephone or mobile network device;
(c) directing said receiver toward said electronic sign to receive said coded signal from said electronic sign; and
(d) causing at least one of an audible or viewed human intelligible message to be provided at said mobile telephone or mobile network device responsive to the received coded signal.

2. The method of claim 1 wherein said coded signal is passive and non-electromagnetic wave radiating.

3. The method of claim 1 wherein said coded signal is active and electromagnetic wave radiating.

4. A communication system comprising:
(a) an electronic sign capable of providing at least one of an active or passive coded signal; and
(b) a remote mobile unit having:
a receiver for detecting and receiving said coded signal:
a local or network data base responsive to said coded signal received by said receiver; and
a digital mobile telephone or mobile digital network device responsive to signals received from said data base in response to a coded signal received from said data base for providing at least one of an audible or viewed message to said mobile telephone or mobile network device.

5. The system of claim 4 wherein said coded signal is passive and non-electromagnetic wave radiating.

6. The system of claim 4 wherein said coded signal is active and electromagnetic wave radiating.

7. A communication method which comprises:
(a) providing an electronic sign capable of providing at least one of an active or passive coded signal;
(b) providing a remote mobile unit having:
a receiver for detecting and receiving said coded signal:
a local or network data base responsive to said coded signal received by said receiver;and
a digital mobile telephone or mobile digital network device responsive to signals received from said data base in response to a coded signal received from said data base for telephonic connection with a further unit remote from said remote unit;
(c) directing said receiver toward said electronic sign to receive said coded signal from said electronic sign; and
(d) causing a telephonic connection to be made with said further unit remote from said remote unit responsive to the received coded signal.

8. The method of claim 7 wherein said coded signal is passive and non-electromagnetic wave radiating.

9. The method of claim 7 wherein said coded signal is active and electromagnetic wave radiating.

10. A communication system comprising:
(a) an electronic sign capable of providing at least one of an active or passive coded signal; and
(b) a remote mobile unit having:
a receiver for detecting and receiving said coded signal:
a local or network data base responsive to said coded signal received by said receiver; and
a digital mobile telephone or mobile digital network device responsive to signals received from said data base in response to a coded signal received from said data base for telephonic connection with a further unit remote from said remote unit.

11. The system of claim 10 wherein said coded signal is passive and non-electromagnetic wave radiating.

12. The system of claim 10 wherein said coded signal is active and electromagnetic wave radiating.

13. The system of claim 10 wherein said human intelligible message is a direction error message provided by said data base in response to said coded signal from said electronic sign indicating the misdirection relative to the electronic sign

14. The system of claim 13 wherein said human intelligible message also includes a geographic message.

15. The system of claim 13 wherein said digital mobile telephone is responsive to signals received from said data base in response to a coded signal received from said electronic sign for telephonic connection with a further unit remote from said remote unit; and
causing a telephonic connection to be made with said further unit remote from said remote unit responsive to the received coded signal.
